# EUROPÄISCHE PATENTSCHRIFT

(11) **EP 2 496 803 B1**
(45) Veröffentlichungstag und Bekanntmachung des Hinweises auf die Patenterteilung: **23.01.2019**
(21) Anmeldenummer: 10782183.7
(22) Anmeldetag: 04.11.2010
(51) Int. Cl.: F01P 3/12, F01N 13/10, F02B 75/22

(54) **KÜHLSYSTEM EINER BRENNKRAFTMASCHINE**
COOLING SYSTEM OF AN INTERNAL COMBUSTION ENGINE
SYSTÈME DE REFROIDISSEMENT D'UN ENSEMBLE MOTEUR À COMBUSTION INTERNE

(30) Priorität: 06.11.2009 DE 102009052151
(43) Veröffentlichungstag der Anmeldung: 12.09.2012
(73) Patentinhaber: MTU Friedrichshafen GmbH, 88045 Friedrichshafen (DE)
(72) Erfinder: HENSSLER, Felix, 78462 Konstanz (DE); REITZ, Jörg, Andre, 88682 Salem (DE)
(74) Vertreter: Mederle-Hoffmeister, Stefan
(86) Internationale Anmeldenummer: PCT/EP2010/006723
(87) Internationale Veröffentlichungsnummer: WO 2011/054517

(56) Entgegenhaltungen:
- EP-A1- 1 947 306
- EP-A2- 1 830 046
- WO-A1-2004/085807
- WO-A1-2008/015791
- WO-A1-2010/119545
- DE-A1-102007 033 679
- JP-A- 63 138 114
- JP-A- 2010 229 878
- US-A- 2 713 332
- US-A1- 2008 060 624

## Beschreibung

Die vorliegende Erfindung betrifft ein Kühlsystem einer Brennkraftmaschine gemäß Anspruch 1. Des Weiteren betrifft die Erfindung eine Brennkraftmaschine gemäß Anspruch 9.

Brennkraftmaschinen werden auf vielen Gebieten eingesetzt, unter anderem beispielsweise im Bereich der Kraftfahrzeugtechnik. Neben Brennkraftmaschinen, die eine Zylinderbank aufweisen, sind auch Brennkraftmaschinen bekannt, bei denen zwei Zylinderbänke V-förmig zueinander angeordnet sind (sog. V-Motoren). Um Schäden an der Brennkraftmaschine eines Kraftfahrzeugs durch Überhitzung vermeiden zu können, weisen diese in der Regel ein Kühlsystem auf, das im Betrieb der Brennkraftmaschine von einem Kühlmittelstrom durchflossen ist und das für eine Temperierung der Brennkraftmaschine und ggf. auch weiterer Komponenten des Kraftfahrzeugs, wie z.B. einer Fahrgastzelle sorgt. Bei V-förmig angeordneten Zylinderbänken werden die Zylinderbänke jeweils parallel von einem Kühlmittelteilstrom durchströmt und somit gekühlt.

Ein bedeutsames Thema im Bereich des Fahrzeugbaus sind die Emissionswerte eines Fahrzeugs. Eine wichtige Rolle für gute Emissionswerte spielt neben einem korrekt und für jede Betriebssituation optimal eingestellten Luft-Kraftstoff-Verhältnis auch die Tatsache, dass der Verbrennungsvorgang möglichst stetig unter gleichen Randbedingungen abläuft. Eine der Randbedingungen, die für die Abgasqualität eine Rolle spielt, ist eine gleichmäßige und möglichst gleichbleibende Temperierung bzw. Kühlung des Motors bzw. der einzelnen Zylinderbänke einer Brennkraftmaschine.

Eine weitere Verbesserung der Emissionswerte kann mit sog. Abgasrückkühlern erreicht werden, in denen ein Teil des Abgases von Brennkraftmaschinen gekühlt wird, bevor es der von der Brennkraftmaschine angesaugten Luft beigemengt und nochmals dem Verbrennungsprozess zugeführt wird. Auch für einen Abgasrückkühler sind möglichst stetige Randbedingungen, insbesondere stetige Randbedingungen hinsichtlich der Kühlung des Abgases notwendig, um die Emissionswerte im gewünschten Maße beeinflussen zu können.

Neben den vorstehend genannten Komponenten weisen Brennkraftmaschinen gemäß dem Stand der Technik aber noch weitere Vorrichtungen auf, die einer zumindest zeitweisen Kühlung bedürfen. Beispielhaft hierfür sei die Druckschrift DE 10 2006 012 847 A1 genannt, aus der eine Vorrichtung zum Erwärmen eines Kühlkreislaufs einer Brennkraftmaschine bekannt ist, wobei ein Retarder mit der Brennkraftmaschine antriebsverbunden ist und wobei einem Kühlkreislauf wenigstens zeitweise Abwärme des Retarders zugeführt wird. Der Retarder weist einen feststehenden Stator und einen relativ zum Stator beweglichen Rotor auf, wobei der Rotor mit der Brennkraftmaschine antriebsverbunden ist. Sowohl der Stator als auch der Rotor weisen Schaufelräder auf. Befindet sich die Brennkraftmaschine des Fahrzeugs in Bewegung, so ist auch der Rotor des Retarders in Bewegung. Sobald eine Flüssigkeit in das Retardergehäuse geleitet wird, versetzt der Rotor die Flüssigkeit in Rotation und presst sie gegen die Schaufelräder des Stators, wodurch Bewegungsenergie in Wärme umgewandelt und das Fahrzeug abgebremst wird. Als Flüssigkeiten, die in das Retardergehäuse geleitet werden, kommen Öle, aber auch Wasser bzw. die Kühlflüssigkeit, die das Kühlsystem der Brennkraftmaschine durchströmt, in Frage.

Eine Brennkraftmaschine mit zwei Zylinderbänken und zwei Abgas-Wärmetauschern ist aus DE102007033679 bekannt. Eine Brennkraftmaschine mit zwei Zylinderbänken und das entsprechende Kühlsystem ist aus US 2713332 bekannt.

Aufgabe der vorliegenden Erfindung ist es, ein Kühlsystem für eine Brennkraftmaschine mit wenigstens zwei Zylinderbänken anzugeben, das für eine möglichst gleichmäßige Temperierung bzw. Kühlung der einzelnen Zylinderbänke und einer zu der Anzahl der Zylinderbänke identischen Anzahl von Abgaswärmetauschern, welche ebenfalls temperiert werden müssen, sorgt, wobei gleichzeitig auch andere Kühlmittel-Verbraucher zuverlässig gespeist werden können. Ferner ist es Aufgabe der vorliegenden Erfindung, eine entsprechende Brennkraftmaschine anzugeben.

Diese Aufgabe wird erfindungsgemäß durch ein die Merkmale des Anspruchs 1 aufweisendes Kühlsystem gelöst. Hinsichtlich der Brennkraftmaschine wird die Aufgabe durch eine Brennkraftmaschine mit den Merkmalen des Patentanspruchs 9 gelöst.

Ein erfindungsgemäßes Kühlsystem, das von einem als Kühlmittel dienenden Fluid in einer bevorzugten Strömungsrichtung (Strömungsrichtung bei Betrieb der Brennkraftmaschine) durchströmbar ist, weist einen Kühlsystem-Stammabschnitt und eine zu der Anzahl der Zylinderbänke und der Abgaswärmetauscher eines Verbrennungsmotors der Brennkraftmaschine identische Anzahl von Kühlsystem-Zweigabschnitten auf. Die Kühlsystem-Zweigabschnitte weisen jeweils einen Zylinderbank-Zweigabschnitt, einen Abgaswärmetauscher-Zweigabschnitt und einen Zusammenführungs-Zweigabschnitt auf. Der Kühlsystem-Stammabschnitt mündet in die Zylinderbank-Zweigabschnitte, welche jeweils einen Zylinderbank-Zweigabschnitt-Auslass aufweisen, der mit einem Zylinderbankeinlass in Fluidkommunikation bringbar ist. Die Abgaswärmetauscher-Zweigabschnitte weisen jeweils einen Abgaswärmetauscher-Zweigabschnitt-Einlass und einen Abgaswärmetauscher-Zweigabschnitt-Auslass auf, welche jeweils mit einem zugeordneten Zylinderbankauslass und einem zugeordneten Abgaswärmetauscher-Einlass in Fluidkommunikation bringbar sind. Die Zusammenführungs-Zweigabschnitte weisen jeweils einen Zusammenführungs-Zweigabschnitt-Einlass auf, welcher jeweils mit einem zugeordneten Abgaswärmetauscher-Auslass in Fluidkommunikation bringbar ist. Die Zusammenführungs-Zweigabschnitte stehen weiterhin in der bevorzugten Strömungsrichtung stromabwärts der Zusammenführungs-Zweigabschnitt-Einlässe mit dem Kühlsystem-Stammabschnitt in Fluidkommunikation bzw. münden in diesen, wobei im Kühlsystem-Stammabschnitt eine Anschlussvorrichtung für einen Retarder (ein Retarder-Vorlaufaufanschluss und ein Retarder-Rücklaufanschluss) vorgesehen ist.

Dadurch, dass die Anschlussvorrichtung für den Retarder im Kühlsystem-Stammabschnitt vorgesehen ist, kann der Retarder mit dem Gesamtkühlmittelstrom versorgt werden, während die für die Emissionswerte verantwortlichen zu kühlenden Komponenten mit möglichst gleichen Teilströmen von Kühlmittel versorgbar sind. Eine Zuschaltung eines angeschlossenen Retarders beeinflusst zusätzlich die Kühlmittelstrom-Gleichverteilung in den Kühlsystem-Zweigabschnitten in einem möglichst geringen Maße, da die entstehenden Strömungen im Kühlsystem-Stammabschnitt auftreten und die Strömungsverhältnisse in den Kühlmittel-Zweigabschnitten somit nicht unterschiedlich beeinflusst werden. Damit wird für eine gleichmäßige Kühlung der abgasrelevanten Komponenten gesorgt.

Weitere Merkmale und Vorteile der Erfindung ergeben sich aus der nachfolgenden Beschreibung von möglichen Ausführungsformen der Erfindung, anhand der beigefügten Zeichnung, die erfindungswesentliche Einzelheiten zeigt, und aus den Ansprüchen. Die einzelnen Merkmale können je einzeln für sich oder zu mehreren in beliebiger Kombination bei einer Variante der Erfindung verwirklicht sein.

Eine mögliche Ausführungsform der Erfindung wird nachfolgend anhand der beigefügten Zeichnung näher erläutert. Es zeigt:

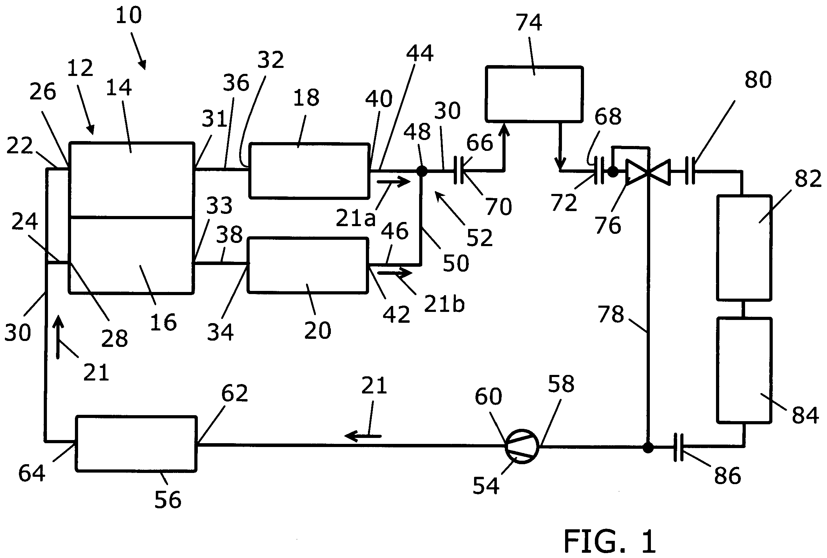

Fig. 1 exemplarisch eine Ausführungsform eines erfindungsgemäßen Kühlsystems, implementiert in einer exemplarischen Ausführungsform einer erfindungsgemäßen Brennkraftmaschine.

In Figur 1 ist der schematische Aufbau einer möglichen Ausführungsform eines erfindungsgemäßen Kühlsystems beispielhaft und schematisch in seiner Zusammenwirkung mit einer Brennkraftmaschine 10 dargestellt.

Die Brennkraftmaschine 10 weist einen Verbrennungsmotor 12 (in der Folge auch als Motor 12 bezeichnet) mit einer ersten und einer zweiten Zylinderbank 14, 16 auf, wobei alternativ hierzu auch Motoren mit mehr als zwei Zylinderbänken denkbar wären. Bei dem beispielhaft beschriebenen Motor 10 handelt es sich um einen Motor, bei dem die beiden Zylinderbänke 14, 16 V-förmig zueinander angeordnet sind (V-Motor), wobei auch Motoren mit einer anderen Zylinderbank-Anordnung denkbar sind (z.B. Reihenmotoren mit mehreren in Reihe geschaltenen Zylinderbänken oder Sternmotoren, welche in mehrere Zylinderbänke unterteilt sind etc.). Neben dem Motor 12 weist die Brennkraftmaschine 10 weiterhin einen ersten und einen zweiten Abgaswärmetauscher 18, 20 auf, welche beide Bestandteil eines (nicht dargestellten) Abgasrückkühlers sind.

Der erste Abgaswärmetauscher 18 ist der ersten Zylinderbank 14 zugeordnet und dient zur Kühlung eines Teils (vorzugsweise 30% bis 40%) des in der ersten Zylinderbank 14 entstehenden Abgases, während der zweite Abgaswärmetauscher 20 der zweiten Zylinderbank 16 zugeordnet ist und Teile (vorzugsweise 30% bis 40%) des dort entstehenden Abgases kühlt. Die gekühlten Teile des Abgases werden über einen Lufteinlass des Motors 12 anschließend einem weiteren Verbrennungsvorgang zugeführt, womit die Emissionswerte des Motors 12 bzw. der Brennkraftmaschine 10 günstig beeinflusst werden.

Zur Kühlung der beiden Zylinderbänke 14, 16 sind in den Zylinderbänken 14, 16 Kanäle bzw. Materialaussparungen angeordnet, die im Betrieb der Brennkraftmaschine 10 von einem Kühlmittel durchströmt werden. In der beschriebenen Ausführungsform sind die Kanäle bzw. Materialaussparungen, welche als Motor-Wärmetauscher fungieren, integraler Bestandteil des Motors 12. Alternativ hierzu sind aber auch Motor-Wärmetauscher vorstellbar, die eine eigenständige Vorrichtung bilden und ggf. nicht dem Motor 12 sondern dem Kühlsystem der Brennkraftmaschine 10 zuordenbar sind.

Wenn die Brennkraftmaschine 10 in Betrieb ist, werden zur Kühlung des Motors 12 beide Zylinderbänke 14, 16 von einem Kühlmittel (in einer bevorzugten Betriebsströmungsrichtung, angedeutet durch Pfeile 21) durchströmt. Hierzu werden die erste Zylinderbank 14 durch einen ihr zugeordneten ersten Zylinderbank-Zweigabschnitt 22 und die zweite Zylinderbank 16 durch einen ihr zugeordneten zweiten Zylinderbank-Zweigabschnitt 24 des Kühlsystems der Brennkraftmaschine 10 gleichermaßen mit Kühlmittel versorgt.

Die beiden Zylinderbank-Zweigabschnitte 22, 24 des Kühlsystems stehen hierfür über einen ersten Zylinderbankeinlass 26, welcher an der ersten Zylinderbank 14 angeordnet ist und über einen zweiten Zylinderbankeinlass 28, welcher an der zweiten Zylinderbank 16 angeordnet ist, und über entsprechende an den Zylinderbank-Zweigabschnitten 22, 24 angeordnete Zylinderbank-Zweigabschnitt-Auslässe (nicht dargestellt) mit der jeweils zugeordneten Zylinderbank 14, 16 in Fluidkommunikation. Hierfür sind am ersten Zylinderbankeinlass 26 eine erste Zylinderbank-Anschlussvorrichtung (nicht dargestellt) und am zweiten Zylinderbankeinlass 28 eine zweite Zylinderbank-Anschlussvorrichtung (ebenfalls nicht dargestellt) vorgesehen. Die beiden Zylinderbank-Zweigabschnitte 22, 24 werden von einem Kühlsystem-Stammabschnitt 30, welcher stromaufwärts (relativ zu der bevorzugten Strömungsrichtung) des Motors 10 in die beiden Zylinderbank-Zweigabschnitte 22, 24 mündet, mit Kühlmittel gespeist.

Auch die beiden Abgaswärmetauscher 18, 20 müssen im Betrieb der Brennkraftmaschine 10 entsprechend gekühlt werden. Hierzu weisen der erste Abgaswärmetauscher 18 einen ersten Abgaswärmetauscher-Einlass 32 und der zweite Abgaswärmetauscher 20 einen zweiten Abgaswärmetauscher-Einlass 34 auf. Der erste Abgaswärmetauscher 18 wird über einen ersten Abgaswärmetauscher-Zweigabschnitt 36 des Kühlsystems, welcher (über einen ihm zugeordneten Abgaswärmetauscher-Zweigabschnitt-Einlass) mit einem ersten Zylinderbankauslass 31 und (über einen ihm zugeordneten Abgaswärmetauscher-Zweigabschnitt-Auslass) mit dem ersten Abgaswärmetauscher-Einlass 32 in Fluidkommunikation steht, mit Kühlmittel versorgt, während der zweite Abgaswärmetauscher 20 über einen zweiten Abgaswärmetauscher-Zweigabschnitt 38 des Kühlsystems, welcher (wiederum über einen ihm zugeordneten Abgaswärmetauscher-Zweigabschnitt-Einlass) mit einem zweiten Zylinderbankauslass 33 und (über einen ihm zugeordneten Abgaswärmetauscher-Zweigabschnitt-Auslass) mit dem zweiten Abgaswärmetauscher-Einlass 34 in Fluidkommunikation steht, mit Kühlmittel versorgt wird.

Zur Abführung des Kühlmittels weisen der erste Abgaswärmetauscher 18 einen ersten Abgaswärmetauscher-Auslass 40 und der zweite Abgaswärmetauscher 20 einen zweiten Abgaswärmetauscher-Auslass 42 auf. Der erste AbgasWärmetauscher 18 steht über den ihm zugeordneten ersten Abgaswärmetauscher-Auslass 40 mit einem ersten Zusammenführungs-Zweigabschnitt 44 des Kühlsystems (über einen diesem zugeordneten Zusammenführungs-Zweigabschnitt-Einlass) in Fluidkommunikation, während der zweite Abgaswärmetauscher 20 über den ihm zugeordneten zweiten Abgaswärmetauscher-Auslass 42 mit einem zweiten Zusammenführungs-Zweigabschnitt 46 des Kühlsystems (wiederum über einen diesem zugeordneten Zusammenführungs-Zweigabschnitt-Einlass) in Fluidkommunikation steht.

Beide Zusammenführungs-Zweigabschnitte 44, 46 münden stromabwärts der Abgaswärmetauscher-Auslässe 40, 42 in einem Vereinigungspunkt bzw. Vereinigungsbereich 48 in den Kühlsystem-Stammabschnitt 30. Zur Zusammenführung der beiden Kühlmittelteilströme 21a, 21b dient in der beschriebenen Ausführungsform z.B. ein Verbindungsrohr 50, welches Bestandteil des zweiten Zusammenführungs-Zweigabschnitts 46 ist. Die Zusammenführung der Teilströme erfolgt in einem Kühlmittelkrümmer 52, welcher die Kühlmittel-Teilströme 21a, 21b in den Kühlsystem-Stammabschnitt 30 zusammenführt.

Weiterhin weist die beschriebene Ausführungsform einer erfindungsgemäßen Brennkraftmaschine 10 eine Kühlmittelpumpe 54 zur Umwälzung des Kühlmittels und einen Öl-Wärmetauscher 56 zur Temperierung von Motoröl, welches als Schmierstoff für den Motor 12 dient, auf. Die Kühlmittelpumpe 54 steht über einen ihr zugeordneten Kühlmittelpumpen-Einlass 58, sowie über einen ihr zugeordneten Kühlmittelpumpen-Auslass 60 mit dem Kühlmittel-Stammabschnitt 30 in Fluidkommunikation. Dasselbe gilt für den Öl-Wärmetauscher 56, der über einen Öl-Wärmetauschereinlass 62 und einen Öl-Wärmetauscherauslass 64, mit dem Kühlmittel-Stammabschnitt 30 in Fluidkommunikation steht. Beide Komponenten 54, 56 sind stromabwärts des Vereinigungsbereiches 48 angeordnet.

Stromabwärts des Vereinigungsbereiches 48 und damit stromabwärts des Kühlmittelkrümmers 52, jedoch stromaufwärts der Kühlmittelpumpe 54 sind im Kühlsystem-Stammabschnitt 30 ein Retardereinlassanschluss 66 und ein Retarderauslassanschluss 68 angeordnet, welche in der beschriebenen Ausführungsform mit einem Retardereinlass 70 bzw. einem Retarderauslass 72 eines in der Brennkraftmaschine angeordneten Retarders 74 in Fluidkommunikation stehen.

Durch die Anordnung an dieser Stelle (stromabwärts des Vereinigungsbereiches 48) ist sichergestellt, dass dem an Retardereinlassanschluss 66 und Retarderauslassanschluss 68 angeschlossenen Retarder 74 einerseits der gesamte Kühlmittelstrom zur Verfügung steht und andererseits die Strömungsverhältnisse in den beiden Kühlmittelteilströmen 21a, 21b nicht durch eine Entnahme von Kühlmittel durch den Retardereinlassanschluss 66 ungleichmäßig beeinflusst werden, was zu einer unerwünschten Verschlechterung der Emissionswerte führen würde, da die beiden Zylinderbänke 14, 16 und die beiden Abgaswärmetauscher 18, 20 unterschiedliche Kühlung erfahren würden. Dies würde dazu führen, dass das durch die Abgaswärmetauscher 18, 20 zu kühlende und in die Verbrennung zurückzuführende Abgas (ca. 30% bis 40% des Gesamt-Abgases) eine unerwünschte Temperatur und ggf. auch (bei einer unterschiedlichen Kühlung der Zylinderbänke) eine unerwünschte Zusammensetzung aufweisen würde.

Weiterhin ist im Kühlsystem-Stammabschnitt 30 ein Thermostat 76 angeordnet, der je nach der im Kühlmittel vorherrschenden Temperatur den Kühlmittelstrom in einen Kühlsystem-Stammabschnitt-Bypass 78 (welcher mit den restlichen vorgenannten Komponenten einen sog. kleinen Kühlkreislauf definiert) und somit direkt zur Kühlmittelpumpe 54 oder zu einem Kühlauslass 80 des Kühlsystem-Stammabschnitts 30 leitet, welcher mit einem Getriebeölkühler 82 und einem Heißkreisradiator 84 zur Kühlung des Kühlmittels in Fluidkommunikation steht (sog. großer Kühlkreislauf). Hierzu weisen der Getriebeölkühler 82 und der Heißkreisradiator 84 entsprechende Kühlmitteleinlässe und Kühlmittelauslässe auf, die mit entsprechenden Anschlussvorrichtungen des Kühlsystem-Stammabschnitts 30 in Fluidkommunikation stehen. Bei Durchströmen des großen Kühlkreislaufs wird das Kühlmittel über einen Kühleinlass 86 des Kühlsystem-Stammabschnitts 30 zur Kühlmittelpumpe 54 geführt.

Sowohl der Kühlsystem-Stammabschnitt 30 als auch die Kühlsystem-Zweigabschnitte sind in der vorliegend beschriebenen Ausführungsform durch Rohre realisiert; alternativ hierzu sind z.B. auch Schläuche denkbar. Es sei an dieser Stelle angemerkt, dass das Kühlsystem in seiner einfachsten Ausführungsform lediglich den Kühlsystem-Stammabschnitt 30 und die Kühlsystem-Zweigabschnitte aufweist, während alle anderen erwähnten Komponenten Bestandteile (ggf. auch integrale Bestandteile) der Brennkraftmaschine 10 sein können. Alternativ hierzu können die vorstehenden und in den Unteransprüchen genannten Komponenten auch Bestandteil (ggf. integraler Bestandteil) des Kühlsystems sein. Der Erfindungsgedanke ist jedoch bereits durch die einfachste Ausführungsform realisiert und die technische Lösung ist dadurch entsprechend definiert.

Obwohl die Erfindung anhand einer Ausführungsform mit festen Merkmalskombinationen beschrieben wird, umfasst sie jedoch auch die denkbaren weiteren vorteilhaften Kombinationen, wie sie insbesondere, aber nicht erschöpfend, durch die Unteransprüche angegeben sind. Sämtliche in den Anmeldungsunterlagen offenbarten Merkmale werden als erfindungswesentlich beansprucht, soweit sie einzeln oder in Kombination gegenüber dem Stand der Technik neu sind.

## Patentansprüche

1. Kühlsystem einer Brennkraftmaschine (10), welche einen Verbrennungsmotor (12) mit wenigstens zwei Zylinderbänken (14, 16) und eine zu der Anzahl der Zylinderbänke identische Anzahl von Abgas-Wärmetauschern (18, 20) und einen Retarder (74) aufweist, wobei das Kühlsystem von einem als Kühlmittel dienenden Fluid in einer bevorzugten Strömungsrichtung durchströmbar ist und einen Kühlsystem-Stammabschnitt (30) und eine zu der Anzahl der Zylinderbänke (14, 16) des Verbrennungsmotors (12) identische Anzahl von Kühlsystem-Zweigabschnitten aufweist, welche jeweils einen Zylinderbank-Zweigabschnitt (22, 24), einen Abgaswärmetauscher-Zweigabschnitt (36, 38) und einen Zusammenführungs-Zweigabschnitt (44, 46) aufweisen, wobei der Kühlsystem-Stammabschnitt (30) in die Zylinderbank-Zweigabschnitte (22, 24) mündet, welche jeweils einen Zylinderbank-Zweigabschnitt-Auslass aufweisen, der mit einem zugeordneten Zylinderbankeinlass (26, 28) in Fluidkommunikation bringbar ist, wobei die Abgaswärmetauscher-Zweigabschnitte (36, 38) jeweils einen Abgaswärmetauscher-Zweigabschnitt-Einlass und einen Abgaswärmetauscher-Zweigabschnitt-Auslass aufweisen, welche jeweils mit einem zugeordneten Zylinderbankauslass (31, 33) und jeweils einem zugeordneten Abgaswärmetauscher-Einlass (32, 34) in Fluidkommunikation bringbar sind, wobei die Zusammenführungs-Zweigabschnitte (44, 46) jeweils einen Zusammenführungs-Zweigabschnitt-Einlass aufweisen, welcher jeweils mit einem Abgaswärmetauscher-Auslass (40, 42) in Fluidkommunikation bringbar ist, und wobei die Zusammenführungs-Zweigabschnitte (44, 46) ferner in der bevorzugten Strömungsrichtung stromabwärts der Zusammenführungs-Zweigabschnitt-Einlässe mit dem Kühlsystem-Stammabschnitt (30) in Fluidkommunikation stehen und in diesen münden, und wobei im Kühlsystem-Stammabschnitt (30) eine aus Retardereinlassanschluss (66) und Retarderauslassanschluss (68) bestehende Anschlussvorrichtung für den Retarder (74) vorgesehen ist.

2. Kühlsystem nach Anspruch 1, **dadurch gekennzeichnet, dass** der Kühlsystem-Stammabschnitt (30) weitere Anschlussvorrichtungen, insbesondere für einen Thermostaten (76) und/oder einen Getriebeölkühler (82) und/oder einen Heißkreisradiator (84) und/oder einen Ölkühler (56) und/oder für eine Kühlmittelpumpe (54) aufweist.

3. Kühlsystem nach einem der vorhergehenden Ansprüche, **dadurch gekennzeichnet, dass** der Kühlsystem-Stammabschnitt (30) und/oder die Kühlsystem-Zweigabschnitte röhrenförmig oder schlauchartig ausgebildet sind.

4. Kühlsystem nach einem der vorhergehenden Ansprüche, **dadurch gekennzeichnet, dass** das Kühlsystem eine zu der Anzahl der Kühlsystem-Zweigabschnitte identische Anzahl von Motor-Wärmetauschern zur Kühlung des Verbrennungsmotors (12) aufweist.

5. Kühlsystem nach einem der vorhergehenden Ansprüche, **dadurch gekennzeichnet, dass** das Kühlsystem eine zu der Anzahl der Kühlsystem-Zweigabschnitte identische Anzahl von Abgas-Wärmetauschern (18, 20) aufweist.

6. Kühlsystem nach einem der vorhergehenden Ansprüche, **dadurch gekennzeichnet, dass** das Kühlsystem mindestens einen Öl-Wärmetauscher (56) aufweist.

7. Kühlsystem nach einem der vorhergehenden Ansprüche, **dadurch gekennzeichnet, dass** das Kühlsystem eine Kühlmittelpumpe (54) aufweist.

8. Kühlsystem nach einem der vorhergehenden Ansprüche, **dadurch gekennzeichnet, dass** das Kühlsystem mindestens einen Thermostaten (76) aufweist.

9. Brennkraftmaschine (10) mit einem Verbrennungsmotor (12) mit wenigstens zwei Zylinderbänken (14, 16) und mit einer zu der Anzahl der Zylinderbänke (14, 16) identischen Anzahl von Abgas-Wärmetauschern (18, 20), sowie einem von einem Fluid in einer Strömungsrichtung durchströmbaren Kühlsystem gemäß einem der vorhergehenden Ansprüche.

10. Brennkraftmaschine (10) nach Anspruch 9, **dadurch gekennzeichnet, dass** die Brennkraftmaschine Motor-Wärmetauscher aufweist, die integraler Bestandteil des Verbrennungsmotors (12) sind.

11. Brennkraftmaschine (10) nach Anspruch 9 oder Anspruch 10, **dadurch gekennzeichnet, dass** die Brennkraftmaschine einen Retarder (74) aufweist.

12. Brennkraftmaschine (10) nach einem der Ansprüche 9 bis 11, **dadurch gekennzeichnet, dass** die Brennkraftmaschine einen Heißkreisradiator (84) und/oder einen Getriebeölkühler (82) aufweist.

13. Brennkraftmaschine (10) nach einem der Ansprüche 8 bis 12, **dadurch gekennzeichnet, dass** die Brennkraftmaschine (10) einen Ladeluftkühler aufweist, welcher zur Kühlung der Ladeluft für die wenigstens zwei Zylinderbänke (14, 16) dient.

## Claims

1. Cooling system of an internal combustion engine (10) which has a combustion engine (12) with at least two cylinder banks (14, 16) and a number of exhaust gas heat exchangers (18, 20) which is identical to the number of cylinder banks, and a retarder (74), it being possible for the cooling system to be flowed through in a preferred flow direction by a fluid which serves as coolant, and the said cooling system having a cooling system trunk section (30) and a number of cooling system branch sections which is identical to the number of cylinder banks (14, 16) of the combustion engine (12), which cooling system branch sections in each case have a cylinder bank branch section (22, 24), an exhaust gas heat exchanger branch section (36, 38) and a merging branch section (44, 46), the cooling system trunk section (30) opening into the cylinder bank branch sections (22, 24) which in each case have a cylinder bank branch section outlet which can be brought into fluidic communication with an associated cylinder bank inlet (26, 28), the exhaust gas heat exchanger branch sections (36, 38) in each case having an exhaust gas heat exchanger branch section inlet and an exhaust gas heat exchanger branch section outlet which can be brought into fluidic communication in each case with an associated cylinder bank outlet (31, 33) and in each case an associated exhaust gas heat exchanger inlet (32, 34), the merging branch sections (44, 46) in each case having a merging branch section inlet which can be brought into fluidic communication in each case with an exhaust gas heat exchanger outlet (40, 42), and the merging branch sections (44, 46) being in fluidic communication, furthermore, with the cooling system trunk section (30) downstream of the merging branch section inlets in the preferred flow direction, and the said merging branch sections (44, 46) opening into the said cooling system trunk section (30), and a connector apparatus which consists of a retarder inlet connector (66) and a retarder outlet connector (68) being provided for the retarder (74) in the cooling system trunk section (30).

2. Cooling system according to Claim 1, **characterized in that** the cooling system trunk section (30) has further connector apparatuses, in particular for a thermostat (76) and/or a transmission oil cooler (82) and/or a hot circuit radiator (84) and/or an oil cooler (56) and/or for a coolant pump (54).

3. Cooling system according to either of the preceding claims, **characterized in that** the cooling system trunk section (30) and/or the cooling system branch sections are/is of tubular or hose-like configuration.

4. Cooling system according to one of the preceding claims, **characterized in that** the cooling system has a number of engine heat exchangers for cooling the combustion engine (12), which number is identical to the number of cooling system branch sections.

5. Cooling system according to one of the preceding claims, **characterized in that** the cooling system has a number of exhaust gas heat exchangers (18, 20) which is identical to the number of cooling system branch sections.

6. Cooling system according to one of the preceding claims, **characterized in that** the cooling system has at least one oil heat exchanger (56).

7. Cooling system according to one of the preceding claims, **characterized in that** the cooling system has a coolant pump (54).

8. Cooling system according to one of the preceding claims, **characterized in that** the cooling system has at least one thermostat (76).

9. Internal combustion engine (10) having a combustion engine (12) with at least two cylinder banks (14, 16) and with a number of exhaust gas heat exchangers (18, 20) which is identical to the number of cylinder banks (14, 16), and a cooling system according to one of the preceding claims, through which a fluid can flow in a flow direction.

10. Internal combustion engine (10) according to Claim 9, **characterized in that** the internal combustion engine has engine heat exchangers which are an integral constituent part of the combustion engine (12).

11. Internal combustion engine (10) according to Claim 9 or Claim 10, **characterized in that** the internal combustion engine has a retarder (74).

12. Internal combustion engine (10) according to one of Claims 9 to 11, **characterized in that** the internal combustion engine has a hot circuit radiator (84) and/or a transmission oil cooler (82).

13. Internal combustion engine (10) according to one of Claims 8 to 12, **characterized in that** the internal combustion engine (10) has an intercooler which serves to cool the charge air for the at least two cylinder banks (14, 16).

## Revendications

1. Système de refroidissement d'un ensemble moteur à combustion interne (10), qui présente un moteur à combustion interne (12) avec au moins deux blocs de cylindres (14, 16) et un nombre d'échangeurs de chaleur de gaz d'échappement (18, 20) identique au nombre des blocs de cylindres et un retardateur (74), dans lequel le système de refroidissement peut être parcouru dans une direction d'écoulement préférée par un fluide servant d'agent de refroidissement et présente une partie d'origine (30) du système de refroidissement et un nombre de parties de branchement de système de refroidissement identique au nombre des blocs de cylindres (14, 16) du moteur à combustion interne (12), qui présentent chacune une partie de branchement de bloc de cylindres (22, 24), une partie de branchement d'échangeur de chaleur de gaz d'échappement (36, 38) et une partie de branchement de réunion (44, 46), dans lequel la partie d'origine du système de refroidissement (30) débouche dans les parties de branchement de blocs de cylindres (22, 24), qui présentent chacune une sortie de partie de branchement de bloc de cylindres, qui peut être mise en communication fluidique avec une entrée de bloc de cylindres associée (26, 28), dans lequel les parties de branchement d'échangeur de chaleur de gaz d'échappement (36, 38) présentent chacune une entrée de partie de branchement d'échangeur de chaleur de gaz d'échappement et une sortie de partie de branchement d'échangeur de chaleur de gaz d'échappement, qui peuvent être mises en communication fluidique respectivement avec une sortie de bloc de cylindres associée (31, 33) et respectivement avec une entrée d'échangeur de chaleur de gaz d'échappement associée (32, 34), dans lequel les parties de branchement de réunion (44, 46) présentent chacune une entrée de partie de branchement de réunion, qui peut être mise en communication fluidique respectivement avec une sortie d'échangeur de chaleur de gaz d'échappement (40, 42), et dans lequel les parties de branchement de réunion (44, 46) sont en outre en communication fluidique dans la direction d'écoulement préférée en aval des entrées de parties de branchement de réunion avec la partie d'origine du système de refroidissement (30) et débouchent dans celle-ci, et dans lequel il est prévu dans la partie d'origine du système de refroidissement (30) un dispositif de raccordement pour le retardateur (74) composé d'un raccord d'entrée de retardateur (66) et d'un raccord de sortie de retardateur (68).

2. Système de refroidissement selon la revendication 1, **caractérisé en ce que** la partie d'origine du système de refroidissement (30) présente d'autres dispositifs de raccordement, en particulier pour un thermostat (76) et/ou un refroidisseur d'huile de boîte de vitesses (82) et/ou un radiateur du circuit de chauffage (84) et/ou un refroidisseur d'huile (56) et/ou pour une pompe à agent de refroidissement (54).

3. Système de refroidissement selon l'une quelconque des revendications précédentes, **caractérisé en ce que** la partie d'origine du système de refroidissement (30) et/ou les parties de branchement du système de refroidissement sont réalisées sous forme de tubes ou de tuyaux flexibles.

4. Système de refroidissement selon l'une quelconque des revendications précédentes, **caractérisé en ce que** le système de refroidissement présente un nombre d'échangeurs de chaleur du moteur identique au nombre des parties de branchement du système de refroidissement pour le refroidissement du moteur à combustion interne (12).

5. Système de refroidissement selon l'une quelconque des revendications précédentes, **caractérisé en ce que** le système de refroidissement présente un nombre d'échangeurs de chaleur de gaz d'échappement (18, 20) identique au nombre des parties de branchement du système de refroidissement.

6. Système de refroidissement selon l'une quelconque des revendications précédentes, **caractérisé en ce que** le système de refroidissement présente au moins un échangeur de chaleur à huile (56).

7. Système de refroidissement selon l'une quelconque des revendications précédentes, **caractérisé en ce que** le système de refroidissement présente une pompe (54) pour l'agent de refroidissement.

8. Système de refroidissement selon l'une quelconque des revendications précédentes, **caractérisé en ce que** le système de refroidissement présente au moins un thermostat (76).

9. Ensemble moteur à combustion interne (10) avec un moteur à combustion interne (12) avec au moins deux blocs de cylindres (14, 16) et avec un nombre d'échangeurs de chaleur de gaz d'échappement (18, 20) identique au nombre des blocs de cylindres (14, 16), ainsi qu'avec un système de refroidissement pouvant être parcouru par un fluide dans une direction d'écoulement selon l'une quelconque des revendications précédentes.

10. Ensemble moteur à combustion interne (10) selon la revendication 9, **caractérisé en ce que** l'ensemble moteur à combustion interne présente des échangeurs de chaleur de moteur, qui font intégralement partie du moteur à combustion interne (12).

11. Ensemble moteur à combustion interne (10) selon la revendication 9 ou la revendication 10, **caractérisé en ce que** l'ensemble moteur à combustion interne présente un retardateur (74).

12. Ensemble moteur à combustion interne (10) selon l'une quelconque des revendications 9 à 11, **caractérisé en ce que** l'ensemble moteur à combustion interne présente un radiateur de circuit de chauffage (84) et/ou un refroidisseur d'huile de boîte de vitesses (82).

13. Ensemble moteur à combustion interne (10) selon l'une quelconque des revendications 8 à 12, **caractérisé en ce que** l'ensemble moteur à combustion interne (10) présente un refroidisseur d'air de suralimentation, qui sert pour le refroidissement de l'air de suralimentation pour lesdits au moins deux blocs de cylindres (14, 16).
